# EUROPEAN PATENT APPLICATION

(11) **EP 4 760 510 A1**
(43) Date of publication of application: **17.06.2026**
(21) Application number: 24218811.8
(22) Date of filing: 10.12.2024
(51) Int. Cl.: G06F 11/14, G06F 11/362, G06F 16/22, G06F 8/30, G06F 11/34, G06F 21/64

(54) **COMPUTER-IMPLEMENTED METHOD, DATA PROCESSING APPARATUS, AND COMPUTER PROGRAM PRODUCT FOR RECORDING A STATE OF A SYSTEM IN A TREE-TYPE DATA STRUCTURE**

(71) Applicant: TGW Logistics GmbH, 4614 Marchtrenk (AT)
(72) Inventor: AUMAYR, Philipp, 4616 Weisskirchen an der Traun (AT)
(74) Representative: Burger, Hannes Alfred

(57) **Abstract**

The invention relates to a computer-implemented method of recording, in a tree-type data structure, a state of a system that comprises one or more devices. Each device has assigned thereto a plurality of data values, the data values comprising variable operational parameters and measured values. After handling of event messages, wherein each of the event messages comprise event information and data value changes, a new branch of the data structure is created. The new branch comprises a new root node comprising at least a timestamp and event information of one or more event messages. Then a new node of the new branch is created for each device for which data values changes are comprised in the event messages. Each new node comprises all data values of the respective device. Pointers to all devices of the system are created from the new root node or from a new node with a direct pointer connection to the new root node. Further a data processing apparatus and a computer program product are provided.

## Description

The invention relates to a computer-implemented method of recording, in a tree-type data structure, a state of a system that comprises one or more devices.

With growing complexity of warehouses, automation has been used more and more to operate the devices in such warehouses. In this context, a warehouse is a general term for all type of storage facilities, where usually a plurality of items of different products is stored.

Such warehouses are known, for example from EP 2 297 005 Al or WO 2024114890 A1. For the operation of such warehouses, software, known as Warehouse Management Systems (WMS) or Warehouse Control Systems (WCS), is used. A WMS or WCS software system is a system that takes orders from an input system and controls an automated warehouse in such a manner that the correct goods are shipped to the locations as required by the orders. Examples for such input systems are an e-commerce application or a customer internal ordering frontend. The task of such a WMS or WCS is to respond to events, like an order that has been placed, or the information that a load carrier has arrived at a certain position, by calculating the next steps required and in turn issuing messages to other systems.

Currently known Warehouse Management Systems and Warehouse Control Systems usually rely on Relational Database Management Systems (RDMS). Changes to the database state are usually stored in the form of log files or tables, either explicitly, i.e. in additional code in the software, or implicitly, i.e. in a change log provided by the database.

Such WMS or WCS can connect to other customer systems by network connections and can connect to the physical machines on-site to perform the actual warehouse tasks. All communication may be logged, e.g. in log files, which can be used to assist in debugging in case of errors.

A problem of the prior art systems is that common WMS or WCS operate in an environment where they either communicate with other customer applications, e.g. for retrieving order data, or networked programmable logic controller devices, PLC, which control the physical machines, e.g. automated storage-retrieval systems (ASRS), conveyor systems, AGV/AMR. Therefore, with the known systems, it is difficult or impossible to restore information about the state of those external or controlled systems in a way to allow debugging by running the same piece of code again.

This also prevents the use of sophisticated debugging tools to re-run the source code of the WCS or WMS in order to precisely replicate the buggy processing steps and therefore to understand the error that occurred and consequently work on fixing the parameters that led to the error.

In order to facilitate improvement of debugging, it was tried to connect modern debugging tools, e.g. step-by-step debugging tools, to databased logging systems, but it was found that this did not work, since large parts of - or possibly the entire - warehouse would have to be stopped and thereby prohibited from processing while debugging is performed. In cases where such in-situ debugging is required, it usually leads to performance degradation at best, more probably the entire warehouse will be idling.

Therefore, it has been found that for WCS or WMS as described above, debugging using log files is preferred. According to the prior art, debugging is performed by knowledgeable persons, e.g. software programmers, architects, or developers, which read the log and restore a mental model of the program state at the time of an incident. The quality of the mental model depends tremendously on the quality and quantity of the log statements, and it is common for developers to have to update the code with improved log statements to have a better understanding of the error the next time it occurs in the real system. This of course not only increases effort required by the developer, but it also requires potentially costly errors, in particular random errors, dynamical errors, latent defects, bugs, malfunctions etc., to happen multiple times before the error can be isolated and resolved.

It is one object of the present invention to solve the deficiencies of the prior art and to enable improved error location, i.e. debugging, by providing a novel method for recording a state of a system.

The present invention achieves this object in particular by the subject-matter of the independent claims. Further embodiments are laid out in the dependent claims.

According to a first aspect, a computer-implemented method of recording, in a tree-type data structure, a state of a system that comprises one or more devices is provided. Therein, each device has assigned thereto a plurality of data values. These data values comprise variable operational parameters and/or measured values. The method comprises handling of event messages, wherein each of the event messages comprises event information and data value changes (of said data values). The method further comprises creating a new branch of the data structure comprising a new root node comprising at least a timestamp and event information of one or more event messages; creating a new node of the new branch for each device for which data values changes are comprised in the event messages, each new node comprising all data values of the respective device; and creating pointers to all devices of the system from the new root node or from a new node with a direct pointer connection to the new root node. For each device for which data values changes are comprised in the event messages, a new pointer is targeted to the new node of the new branch, wherein the new node corresponds to (in particular digital representation of) the device. And for each device for which there were no data values changes in the event messages, a new pointer is targeted to an existing node of an existing branch, wherein the existing node corresponds to the (in particular changed) device(s), and wherein the targeted existing node is the same as targeted from the root node of the most recent existing branch.

In other words, in the case of each device, if data value changes occur, they will be part of the event messages.

A branch in this context may be regarded as a commit that can be thought of as a snapshot along the timeline. Commits may be created to capture the state of a system at that point in time. Therefore, advantageously, a history of states and messages may easily be achieved and stored.

A device within the system that comprises one or more devices may also be the controller comprising functions to calculate the next steps following an event.

In this regard, it is advantageous that it becomes possible to perform post-mortem process debugging of WCS or WMS code using sophisticated step-debuggers without having to connect to the real site and perform in-situ step-debugging. Using a sophisticated debugger not only facilitates the analysis, it also enables developers to more easily train new colleagues by stepping through the actual code, inspecting variables, etc.

According to an advantageous embodiment, the system further comprises a controller and the one or more devices are controlled by the controller. The controller is connected to the one or more devices via a data transmission connection, wherein each device of the one or more devices has assigned a plurality of data values which comprise operational parameters and measured values. In this case, the step of handling of event messages comprises receiving, from one of the devices or from the controller, one or more event messages; determining a previous state of the system, wherein a state of the system comprises states of the controller and the one or more devices; and generating instructions based on the previous state and the event message and transmitting the instructions to a target or to targets. Therein, the targets of the instructions are the one or more devices if the event message was received from the controller, and the target of the instructions is the controller if the event message was received from one of the devices. The instructions are deterministic and suitable to modify the target or targets into a new state.

The first aspect can be improved by determining the previous state of the system and by generating instructions from the event messages. With these instructions, the devices, for which the data values are or have been changed can be identified and accordingly a new state can be recorded.

As an example, an event message can result in instructions to operate a conveyor belt at a different speed. A possible cause for a modified speed can be a congestion in the transport route. Accordingly, an instruction can be generated comprising the changed data value for the speed parameter of the conveyor belt.

According to another advantageous embodiment, the devices of the system are grouped together in two or more groups and/or levels, and the data structure has several levels of intermediary nodes, where each intermediary node represents each device, group or level, wherein the pointer of a device has the respective intermediary node as source and the respective node corresponding to the device as target.

With respect to the tree-type data structure, the root nodes may be regarded as commits, nodes representing devices may be regarded as "leaves" (i.e. one node is a "leaf'), intermediary nodes may be regarded as "trees".

With the introduction of intermediary nodes, the grouping of the devices can advantageously be used to improve the recoding of a system state. For example, a group of devices for which the data values are seldomly changed, e.g. in comparison to other devices, can preferably be handled as one node, and therefore the number of pointers that need to be created can be reduced. Similarly, in a device that has several parts, where one part is changed more often, this part can be de-grouped from the rest (of the device), thereby reducing the re-writing of the data values of the parts that do not change often.

According to another advantageous embodiment, the method comprises adding of nodes and pointers for devices that are introduced to the system and/or deleting of nodes and pointers for devices that are removed therefrom, wherein the introduction or removal is indicated in the event message.

By adding new devices to the system, nodes representing the new devices within the data structure and therefore the data structure may be updated to reflect the real system. By removing nodes of devices that are removed, the amount of data that needs to be stored for each state may be reduced for the states after the removal.

According to another advantageous embodiment, the method loops. Each loop may be triggered by receiving one or more of the event messages. Alternatively, or in addition, each loop can be triggered at fixed times or in fixed time intervals and/or by an external trigger. Commits therefore may be created by a, or a respective series of, particularly time-triggered, command(s) to capture the state of the system at that point in time.

Each loop of the method creates one state of the system. In order to properly log system states, states are preferably logged continuously. Depending on the specific circumstances of the system, i.e. how many event messages are created, etc., an event message may be set as a trigger for the recording of the system state. It may be better suited for some systems to record (or some systems may benefit from recording) system states periodically at fixed times. It might also be a preferred option or an additional technique to manually trigger the recording of a system state, e.g. before a modification of the system is performed, like for instance adding or removing of device(s).

According to another advantageous embodiment, the generated instructions comprise a time or time interval for a next iteration of the method.

Thereby, the recording of the next system state may preferably be initiated in dependence of the content of the event messages and/or the previous system state.

According to another advantageous embodiment, the method further comprises marking the new branch and/or new nodes as read-only, based on a corresponding indication comprised in the event message.

For certain warehouse systems, a permanent record of system states may be required. Such a requirement may be fulfilled by marking a new branch and/or nodes as read-only after its creation. Also due to the read-only marking, data security is increased, since accidental overwrites can be avoided. A WORM-storage (Write-Once-Read-Many, Immutable storage) may be used.

According to another advantageous embodiment, preferably each node comprises a hash value of the data values in the node.

By adding (incorporating) a hash value, data integrity can be ensured, and tampering with the records can be impeded (prevented).

According to another advantageous embodiment, the tree-like data structure is distributed, and the method further comprises combining the parts of the data structure before creating a new branch.

With the distributed approach, a common log of distant physical machines can be achieved. The parts of the data structure can relate to different production or storing facilities, buildings, floor levels, or even rooms. Depending on the specific circumstances, it may be useful to record the states of the system parts individually and combine them to be able to retrace the interactions between the parts.

According to a second aspect, a computer-implemented method of generating a time-specified state of a system that comprises one or more devices, from a tree-type data structure, is provided. Therein, generating is performed based on a specified timestamp. Similar to the first aspect, each device has assigned thereto a plurality of data values and/or parameters. These data values may comprise or represent variable operational parameters and/or measured values. The tree-type data structure comprises branches, each branch having a root node and other nodes. Each of the root nodes comprises at least a timestamp and event information; and each of the other nodes comprises all data values of a corresponding device, and each of the other nodes is connected as a target by a pointer to either one root node of one of the branches or to another node of one of the branches with a direct pointer connection to one root node as a source.

Every (target) node may be connected to the root node, possibly or preferably via intermediary nodes.

For each of the devices, each two other nodes (in respective different branches), which correspond to one particular device, are different in at least one data value comprised in the other nodes of the corresponding device. In other words, the data values of a device can change or can be changed, and since in the data structure a new node for a device would only be generated if at least one of the data values of a device has changed, each two nodes of a device are different. In particular, the data values of a node associated with the timestamp comprised in the most recent branch's root node, to which the node corresponding to the respective device is connected, is different from the data value of a node for the same device, where the node is associated with the timestamp comprised in a different branch's root node. The method comprises identifying a first root node as a starting point according to the specified timestamp. Then, a next level of nodes of the identified first root node's branch is repeatedly identified by following all pointers of the previously identified nodes to respective target nodes of (digital representation of) respective devices. Finally, the information stored in all identified nodes is added to generate the time-specified system state. Such identification of nodes and adding to generate the time-specified system state may be done in a serial manner; however, parallel processing or processing in parallel manner of sequences of nodes is also possible or feasible.

With the second aspect, the tree-type data structure can be used to easily generate a time-specified state of the system. By following the pointers to the respective nodes which contain the latest set of data values for each device, the full system state can easily be agglomerated.

According to an advantageous embodiment, a second system state is generated based on a second specified timestamp or the event information; and the time-specified system state and the second system state are compared, thereby identifying changes in the data values of the devices.

With comparing two system states, such as the (first) time-specified state and the second (time-specified) system state, the differences can easily be identified. In particular with the node-based structure, identical nodes can, e.g. with a node-ID, be discarded easily from the comparison.

According to another advantageous embodiment, similar to the first aspect, the devices of the system are grouped together in two or more groups and/or two or more levels, and the data structure has several levels of intermediary nodes, wherein each node represents one of device, group, or level, and wherein the pointers to a node have the respective intermediary node as the source and the respective node as the target.

With the introduction of intermediary nodes, the grouping of the devices can improve the generating of a system state. For example, a group of devices for which the data values seldomly change, e.g. in comparison to other devices, can be handled as one node, and therefore the number of pointers that need to be followed can be reduced. Similarly, a device that has several parts, where one part is changed more often, this part can be de-grouped from the rest, thereby reducing the repeated reading of the data values of the parts that do not change often.

According to another advantageous embodiment, the method further comprises checking, for one or more nodes, a hash value of the data values.

Here, the integrity of the stored data can be verified, in order to enhance the reliability of the generated system state.

According to another advantageous embodiment, the tree-like data structure is distributed, and the method further comprises combining the parts of the data structure before generating the time-specified system state and/or the second system state.

With the distributed approach, the generation of a part of the system becomes possible. In particular, if it is clear that an error occurs only in one part, the effort to generate a system state can be reduced. The parts of the data structure can relate to different production or storing facilities, buildings, floor levels, or even rooms. Depending on the specific circumstances, it can be useful to generate the states of the system parts individually and compare them to other system states of the same part to be able to better identify error sources in one part.

According to a third aspect, a data processing apparatus comprising means for carrying out any of the aforementioned methods is provided.

According to a fourth aspect, a computer program product and/or computer-readable medium, which can cause a computer to carry out any of the aforementioned methods, is provided.

The aspects show possible embodiment variants, while the subject-matter of the aspects is not limited to the specifically shown embodiment variants thereof, but rather combinations of the individual embodiment variants with one another are also possible. In particular, the features of the methods can also be implemented in a data processing apparatus and vice versa, i.e. the subject-matter of the aspects described for the method can also be employed in the other aspects, wherein embodiments can even be combined.

For easier readability, in the following, only the term Warehouse Control Systems, or short WCS, is used. It is noted that a Warehouse Management Systems, or short WMS, could be used in similar fashion. For a better understanding of the invention, it is explained in more detail with reference to the figures. The embodiments are illustrated in the schematic drawings in which like reference numerals refer to like elements and in which:
- Fig. 1: shows a system according to the prior art;
- Fig. 2: shows an exemplary system;
- Fig. 3: shows a data structure according to an inventive embodiment;
- Fig. 4: shows a first modified data structure according to an inventive embodiment;
- Fig. 5: shows a second modified data structure according to an inventive embodiment;
- Fig. 6: shows a third modified data structure according to an inventive embodiment;
- Fig. 7: shows a flowchart of the method for recording a state according to an inventive embodiment;
- Fig. 8: shows a data flow diagram according to an inventive embodiment; and
- Fig. 9: shows a replay tool according to an inventive embodiment.

It is noted that in the differently described embodiments, the same parts are provided with the same reference numbers or the same component designations, wherein the disclosure can be applied to the same or similar parts with the same or similar reference numbers or the same or similar component designations. The position designations in the description, such as top, bottom, side, etc., are related to the directly described and illustrated figure and these position designations can be transferred to other positions for other figures.

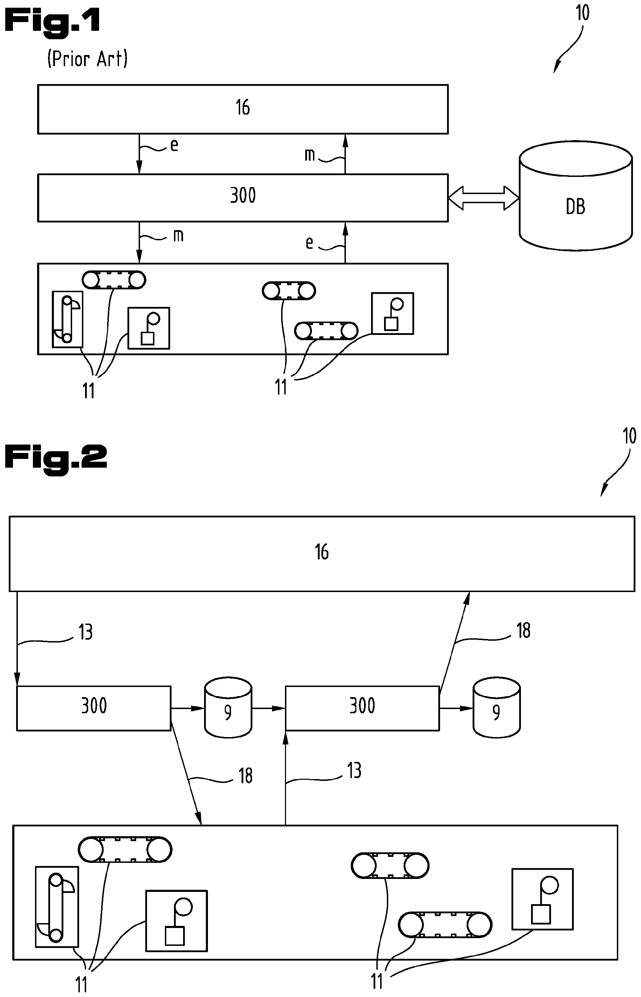

Fig. 1 shows a warehouse management and/or control system 10 according to the prior art. In such conventional approach, a higher-level controller 16 may send an event, marked with the letter e in Fig. 1, to a data processing apparatus 300, like a warehouse control system (WCS), which in turn generates a message, marked with m, and sends the message m to one or more devices 11 of the system 10. The event e and the message m could contain instructions. The WCS 300 may log the events e and messages m into a database, which is marked with DB in Fig. 1. As described above, in the prior art, relational databases or similar techniques are used.

System 10 may comprise devices 11 from a broad range of, in particular different types of, devices. Some examples for devices are: components or systems for transporting articles, in particular a storage and retrieval system comprising storage and retrieval units, for example single-level storage and retrieval units (shuttles) and/or multi-level storage and retrieval units (stacker cranes), and/or a conveyor or conveying system (comprising motor driven rollers or belts) for transporting articles, such as, for example, a stationary conveying system, in particular an overhead conveying system and/or a ground-based conveying system, and/or a mobile conveying system, in particular autonomously displaceable transport vehicles, e.g. automated guided vehicles (AGVs) and/or autonomous mobile robots (AMRs), components for sorting articles, such as, for example, sorting devices and suchlike, components for processing orders, in particular automatic and/or manual workstations, for example picking stations, packing stations, picking robots and suchlike, components for handling articles, for example palletizers, depalletizers, gripping robots and suchlike, components for storing articles, in particular storage locations for storing articles, which are provisioned, for example, by means of mobile storage racks, stationary storage racks and/or suchlike, components for supporting articles, in particular loading aids, for example trays, containers, boxes, hanging bags for the suspended transport of articles and suchlike and/or components for processing data, for example software components, control devices, in particular warehouse management system (WMS), warehouse control system (WCS), and suchlike. Other devices 11 can also be comprised in system 10, such as RFID and/or barcode scanning devices, IP-cameras.

The underlying principle presented according to a preferred aspect is based on functional programming principles. In functional programming, a concept of pure functions exists. While the exact definition of a pure function varies, the definition used herein is as follows:
Pure functions are free from side effects and the result of a function depends solely on the input parameters.

Defined in that way, this means that pure functions can execute multiple times with the same input parameters and always execute in the same way for every invocation. Therefore, if the same parameters can be provided, the pure function may be executed again with a debugger attached and the function outcomes will be exactly the same every time.

The general task of a WCS 300 is to react to events, such events being e.g. a new order has arrived, a device has finished a task, etc., and control the environment by performing side-effects, e.g. sending a control message to a device, informing the customer host system of a finished order, etc. React or reacting to events in the present context may particularly mean to perform or performing actions. The Warehouse Control Systems may be regarded as event driven system.

The naive form of such a function could be the following in functional notation:
*side_effects = simple_wcs (event)*

Therein, *side_effects* are or is the result of the function *simple_wcs* with *event* as the functional parameter.

While the function would be able - as caused by the addressed devices of the system - to for example route load carriers statically from one point or position to another point or position, it would not be able to remember the location of other load carriers or the state of the orders it is currently processing. Here, the memory of a WCS, the positions of load carriers, the state of individual devices and orders is referred to as the state of the (in particular warehouse or production) application. The memory of a WCS in this case may be regarded as the information a WCS uses to perform its tasks in reaction to events (event messages), thereby generating (new) event messages as required, in particular to control one or more devices.

A slightly improved version of the *simple_wcs* with *state* as additional parameter function defined above could be of the following form:
*side_effects = with_memory(state, event)*

In fact, this is what most existing WCSs do: react to an event and update the state to reflect those changes. The problem here is that the existing state object needs to remain identical and not be modified, because the state object has to be kept or maintained for the WCS to execute the function with the same parameters again.

The improved version of the function therefore has the following form:
*(new_state, side_effects) = west(current_state, event)*

Meaning that *new_state* and *side_effects* are the result of the function *wcs* with the input parameters *current_state* and *event.*

In order to further improve the present subject-matter, and with the requirement that the pure function of the WCS needs to be side effect free, its messages cannot be sent with the need for a response or confirmation, since this could lead to different results depending on the current status of the system. In fact, particularly moving or movable devices may not stop or wait at all, since in order to proceed an external event, e.g. a response, in particular confirmation, would be required. In a typical system according to the invention, examples for events may include (also in combination): a message from a device, a message from the controller, e.g. a host / customer system, a timer event executed at regular intervals or for a specific scheduled event like for instance reaching or passing a checkpoint or section, and/or a finished response from an external system, e.g. http response.

The side-effects that are executed after finishing *wcs()* returned are typically messages to a device, messages to the controller, e.g. host / customer system, configuration of new timers, and/or a new request to another external system, e.g. an http request.

The above *wcs* function turns the *state* into an immutable variable and in order to track all changes, a log of the invocations of *wcs* with the corresponding *state* and *event* is kept. In the production system, i.e. when not debugging, the side-effects are executed after the function has returned, whereas when debugging, they are not executed at all because the external system (in particular the devices) will not be in the correct state to receive those notifications or possibly not even available.

Because a new state has to be returned by the wcs function, it appears that the original state needs to be copied. In naive implementations, this would have a too high burden on the system:
According to professional experience, the following estimation is considered: A typical warehouse scenario creates roughly 1.7 million events per day. The working set - i.e. the amount of memory representing a single state - may amount to approximately 50 megabytes. This would in turn result in roughly 81 terabytes of data being required to be stored per day, which can be very costly and disadvantageous. The same number would apply to simulations of such warehouse operations.

This problem is solved in functional programming, in particular by using structural sharing, with directed-acyclic graph data structures, DAG, that re-use large amounts of the previous state. One such exemplary solution uses a tree-type data structure 1, e.g. a content-addressed storage system, as described above. This enables the functionality that minor modifications, e.g. changing a simple property, or changes in the data values 12 of only one device 11, in a large group of devices 11, e.g. the storage structure for 250.000 load carriers, which result in large data sets, to use less than a single digit kB of additional data per change. In experiments done with the scenario above, it was shown that tracking the state 9 could be done with a few gigabytes per day, compared to the 81 terabytes described above. Therefore, according to the present inventive approach, less data storage is required. Furthermore, no compression of data is required (compression-free) and therefore comparably low data access latency can be achieved.

The DAG may consist of vertices (also called nodes) and edges (also called arcs), with respective edge(s) being directed from one vertex to another, such that following those directions will never form a closed loop.

The main advantage of this approach is that it allows the logic of a WCS to be re-run in the same way it was executed originally. For example, with a *current_event* (event^n) and *previous_state* (state^(n-1)) the wcs function wcs(current_event, previous_state) will behave exactly as originally.

It can be re-run using a step-debugger to analyse a problem long after the issue occurred and without preventing the system from continuing. This, in turn, results in fewer required log statements in a code base, improving the performance of the code, because the processor uses less time on I/O for writing log files.

According to an advantageous embodiment, in order to re-execute the WCS or WMS code in the same manner, e.g. in or as a replay-tool, the state before the (desired or looking at) event was executed is loaded from the state storage, the WCS or WMS code is checked out from the code storage to the version that is defined in the (according to the timestamp 19 so time-specified) state and is built (i.e. built code is generated); the so executable program is started with parameters indicating the respective (desired) state (i.e. commit) to start from, the program then starts and loads the in memory state to (with) the version of the provided commit and calls the deterministic wcs execution function.

The resulting side effects can then be observed but will not be re-executed as the environment (in particular devices of the system) cannot be set up to deal with the execution of those side-effects (since devices may be in another state, or not available at all).

The code may be stored in a code storage in a trackable manner, e.g. a GIT repository. The states respectively time-specified state may advantageously comprise version information and/or hash information for respective code versions for the WCS or WMS code.

The deterministic function may advantageously be encapsulated by a controller. The controller may comprise one or more processes that may register their event handler functions that are handling states and events. The functions may be provided as service objects that are capsuled and accessible via dependency injection.

According to an advantageous embodiment, ways to filter commits to find a replay commit may be provided, for instance time filter, filter for LoadCarrier ID, filter for specifying commit ID including to show a number of commits before and after a specified commit. The term "commit" and "time-specified state" may be used synonymously within this specification. The filter functions may preferably be implemented within a graphical user interface.

The use of sophisticated debugging utilities reduces the amount of time a developer needs to re-produce, analyse and fix an issue. The approach also reduces the risk of deploying a new version, because the new version can be executed in parallel, but without executing the side effects, to the old version to determine if any problems are introduced with the new version.

The software used to control a real site could also be able run within a simulation. The interface of the WCS, i.e. events as inputs, actions as output, is very close to the boundary where simulation and on-site differ: in simulation, the virtual environment creates the events; on site, the events are received, i.e. from the physical devices, via (information) network and processed. For actions, the result of the WCS is in a similar manner interpreted by a virtual environment in simulation, whereas on site they are sent to the physical devices or the host system via (information) network and processed there.

With the described subject-matter, basic principles of a Warehouse Control Software are described with the benefit of isolating side effects from the logic of a WCS itself. By isolating these side effects, it becomes possible to debug the application without requiring the environment (i.e. in particular devices) to be in a matching state. The application thereof involves writing a new WCS system based on those principles to allow easier reproduction, analysis and fixing of software problems that have occurred at a site.

This is especially useful in situation where a reproduction of a system is not possible, e.g., in an emulation model, or the emulation model does not allow triggering the same error message, and the error only occurs rarely.

Fig. 2 shows the system 10 according to the inventive embodiments. Therein, it can be seen that the WCS 300 may receive an event message 13 from the devices 11 and/or from a controller 16. After processing the event message 13 the WCM 300 records a system state 9. It is noted that in Fig. 2 two routes are shown. Each route comprises an event message 13 and instructions 18. The first route starts at controller 16, and the respective event message 13 is transmitted from the controller 16 to a data processing apparatus 300. The data processing apparatus 300 generates the instructions 18 from the event message 13, records the state 9 and sends instructions 18 to the devices 11. The second route starts at the devices 11, and the respective event message 13 is transmitted from the devices 11 to a data processing apparatus 300. The data processing apparatus 300 generates the instructions 18 from the event message 13, records the state 9 and sends instructions 18 to the controller 16. Therein, the generation and sending of instructions 18 to the devices 11 and to the controller 16, respectively, is an optional embodiment.

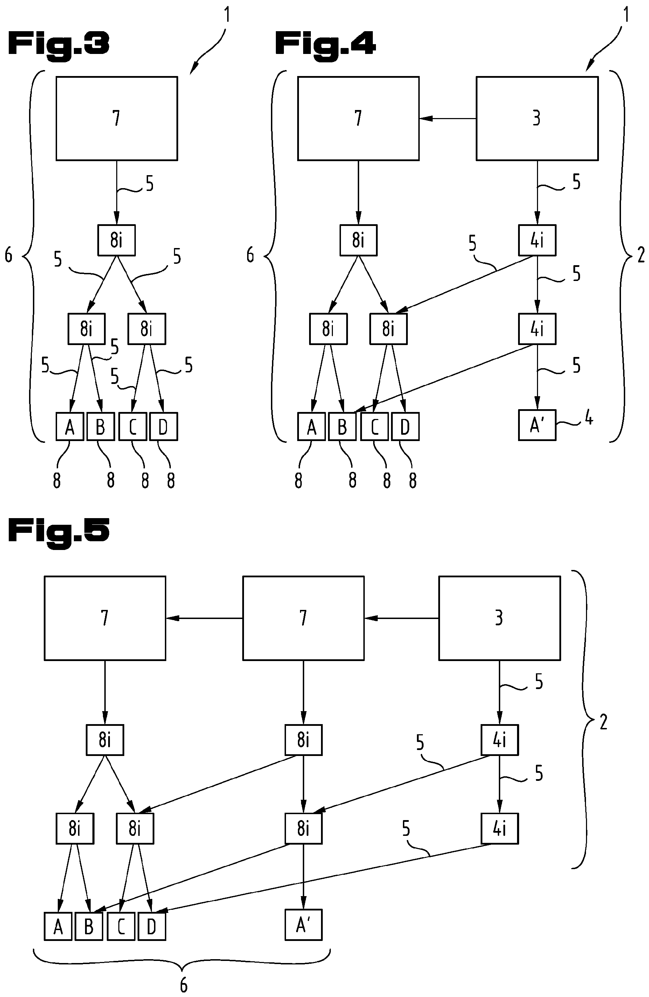

The recording of the state 9 is described in greater detail with Figs 3 and 4. Fig. 3 shows a tree-type data structure 1, and in particular it shows an existing branch 6 of such a tree-type data structure 1. The branch 6 has a root node 7, and every root node 7 comprises at least a timestamp 19 and the information 14 of one or more event messages 13. The timestamp 19 and the information 14 of the event messages 13 are not depicted in Figs. 3, 4, 5, and 6. Depending on the configuration of the system 10, the tree-type data structure 1 comprises nodes 8, where each node 8 represents one or more devices 11. Each node 8 comprises, in particular all, data values 12 of the device(s) 11 that the node 8 represents.

All nodes 8 are connected by pointers 5; in particular, a respective pointer 5 connects a respective node 8, 8i to or with either another (intermediary) node 8i or to the root node 7. Pointers 5 are directional in that the pointer 5 or string of pointers 5 for each node 8 run from the root node 7 as the source to the node 8 as the target. A pointer generally is a memory reference, which stores the memory address of a data object instead of the data object itself. Using pointers is therefore conserving resources, in particular since a change of the pointer can easily be performed with less processor performance and less memory need than other types of storing. The edges of the DAG (referenced above) are preferably formed by pointers 5 or are designed as such.

Data values 12 of the devices 11 may refer to all types of information that is deemed to be important for logging. The data values 12 are changeable variables that describe or control the devices 11, and which may change during the operation of the respective device 11. In particular, the data values 12 can comprise parameters related to the operation of a device 11, i.e. speed with which to operate, voltage to apply, height to which elevate, etc. The data values 12 can also comprise information related to a payload of a transportation device 11, i.e. amount and type of articles transported or the like. The data values 12 can also comprise measured values which refer to a device 11, i.e. temperature of an engine, of a fluid, an angle of a swaying movement, etc. More concrete examples may be: throughput of items (goods, articles), speed of elements, rotation speed, voltage, temperature, item count, active orders (each containing at least one item) to be full-filled, aggregated values such as accumulated rotations or distances, etc.

In the known prior art, recording a state of a system is handled, for example, by storing all data values of all devices at certain intervals.

The allocation of nodes 8 and devices 11 will be detailed later on (below). The data structural elements, i.e. nodes, that correspond to the devices 11 are labelled with capital letters A, B, C, D, and E, where each capital letter serves as a label for one device 11, or group of devices. For the sake of simplicity, the aspect is first described in a fashion that each node 8 represents one device 11. Also, the structure 1 may comprise intermediary nodes 8i, which may also represent groups of devices 11. Although intermediary nodes 8i are depicted in Figs. 3, 4, 5 and 6, they are optional, and the nodes 8 may be directly connected to the root node 7, i.e. respective pointers 5 are directed from the root node 7 to the respective node 8 (i.e. the digital representation of a device 11, labelled with A, B, C, or D).

In Fig. 3, the system 10 comprises four devices 11, which are represented by the nodes 8, and for purpose of the description, the nodes 8 and the represented devices are labelled A, B, C, and D. The groups represented by the intermediary nodes 8i may, for example, refer to devices 11 at different rooms, locations, or with different purpose, where some devices 11 (their nodes labelled with A and B) are grouped together, because, for example, they are located in the same room. Devices 11 (their nodes labelled with C and D) are also grouped together, but in a different room (location).

As an abbreviation, a device 11 which is represented by a node 4, 8 which is labelled with, for example, the letter A is furthermore described as device 11 A.

As can be seen from Fig. 3, the branch 6 represents a state 9 of the system 10 at a certain point of time, as designated by the timestamp 19 comprised in the root node 7. The generation of a system state 9 will be described later as method 200.

Fig. 4 shows a first modified data structure 1 according to an inventive embodiment, and in the depicted case, the recording regarding an event message 13 comprising event information 14 and data value changes 15 is shown. In particular, the data value changes 15 of the event message 13 contains only changes for the data values 12 of the device 11 A. The changes 15 to the data values 12 of device 11 A results in the changed device 11 A'.

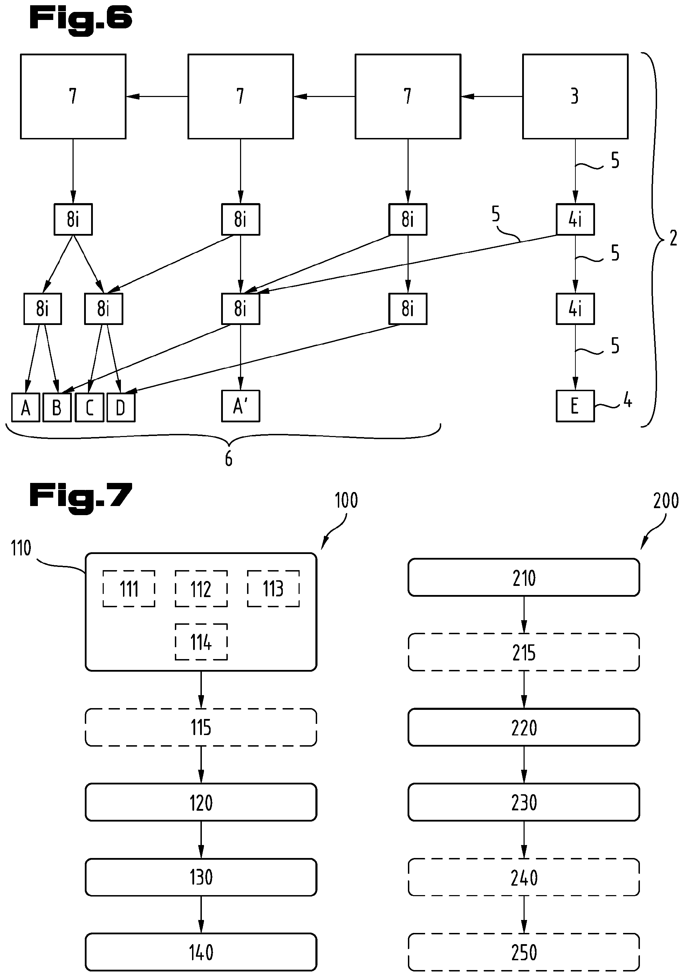

Reference signs of the method 100, as shown in Fig. 7, will now be used to describe the procedure to arrive at the structure 1 of Fig. 4.

In step 110, one or more event messages 13 are handled. As stated above, each event message 13 has event information 14 and/or data value changes 15 for devices 11.

In step 120 a new branch 2 of the data structure 1 is created. The branch 2 comprises a new root node 3, which comprises or into which at least a timestamp 19 and event information 14 of the event messages 13 is stored.

The timestamp 19 may thereby be taken from a timestamp of the event as described in the event message 13 or from the time stamp of the event message 13 itself. Also, the time stamp of the recording of the state 9 may be used.

In step 130 a new node 4 of or at the new branch 2 is created for devices 11 for which data value changes 15 are comprised in the event messages 13. In this case, for device 11 A a new changed device 11 A' is created. Each new node 4 comprises, in particular all, data values 12 and/or measured values of the respective device 11. This means that the node 8 of device 11 A of branch 6 comprises the data values 12 of device 11 A before the data value changes 15, and node 4 of branch 2 comprises the data values 12 of device 11 A after the data value changes 15, indicated as device 11 A'.

In step 140, pointers 5 are created to all device-nodes 8 (i.e. nodes 8 representing a device 11) from the new root node 3 or from a new node 4, depending on the configuration of the structure 1, as described above, with a direct pointer connection to and/or from the new root node 3. Where the expression direct pointer connection means that every node 8 is connected to the root node 7, possibly or preferably via intermediary nodes 8i, or every new node 4 is connected to the new root node 3, possibly or preferably via intermediary nodes 4i.

The pointers 5 are created in such a way for the new root node 3 that, for devices 11 for which data value changes 15 are comprised in the event messages 13, a new pointer 5 is targeted to the new node 4 of or at the new branch 2. In other words, for the changed devices 11 (i.e. where a change of data values has occurred), in this case device 11 A', the new node 4 is connected via new pointers 5 to the root node 3. It may be stated that new nodes 4 become (old respectively existing) nodes 8 as soon as a new branch is generated.

Also, for device 11 for which there were no data value changes 15 in the event messages 13, a new pointer 5 is targeted to an existing node 8 of an existing branch 6. For these pointers 5, the targeted existing node 8 is the same as targeted from the root node 7 of the most recent existing branch 6.

In other words, if the data values 12, i.e. the control parameters and/or measured values, of a device 11 have changed or are changed since the most recent recording of a state 9 of the system 10, a new node 4 is created and a corresponding pointer 5 is set. If, however, the data values 12 assigned to a device 11 have or are not changed, no new node is created for this device 11, but instead a pointer 5 is established to an existing node 8, i.e. the most recent node 8 for this device 11. Since no new nodes 4 are created for devices 11 without changes 15, the data required to store the state 9 of the system 10 can effectively be reduced.

In the case of Fig. 4 intermediary nodes 4i are also introduced, but as described above, they are optional.

With the new branch 2 as a starting point, i.e. source, then, for each device 11 the most recent data value 12 set is reachable. In other words, by following all pointers from a certain root node 3, 7 all nodes 4, 8, of all devices 11 of the system 10 can be reached, and the set of these nodes 4, 8, contain the data values 12 of those devices at the timestamp of that root node 3, 7.

The system 10 may further comprise an optional controller 16, which is also depicted in Fig. 2. In this case, the controller 16 is connected to the one or more devices 11 via a data transmission connection. This data transmission connection can be wireless or wired. The depiction in Fig. 2 is merely an example, the data transmission connection does not have to comprise the WCS 300; the data transmission between the controller 16 and the devices 11 may be separate from the data transmission to and from the WCS 300.

In this case, step 110 of handling 110 the event messages 13 may comprise receiving 111, from one of the devices 11 or from the controller 16, one or more event messages 13. As described above, this can refer to the left side of Fig. 2 as well as to the right side of Fig. 2. For the purpose of the following description, the right side is considered.

Step 110 then also comprises determining 112 a previous state 9 of the system 10. This previous state 9, schematically indicated between the two instances of the WCS 300, comprises states of the controller 16 and the one or more devices 11. This refers to the above detailed tree-type data structure 1, where a state 9 comprises nodes 4, 8 representing devices 11. In this case, the controller 16 is also represented by a node 4 or 8.

The method then proceeds with generating, in step 113, instructions 18 based on the previous state 9 and the event message 13.

Finally, the instructions 18 are transmitted, in step 114, to a target or to targets, wherein the targets of the instructions 18 are the devices 11 if the event message 13 was received from the controller 16, and the target of the instructions 18 is the controller 16 if the event message was received from one of the devices 11. The instructions 18 are deterministic and suitable to modify the target or targets into a new state.

As indicated above, the devices 11 of the system 10 are grouped together in two or more groups and/or two or more levels. The corresponding data structure 1 then also has several levels of intermediary nodes 4i, 8i. Each intermediary node 4i, 8i would then represent a single, ungrouped device 11, a group of devices 11 or a level of devices 11. As stated before, grouping may be done by location or purpose. Separating devices 11 into levels may be useful if e.g. a second level of devices 11 is dependent on the working result or operations of a first level of devices 11.

In this case, the pointer(s) 5 of a node 4, 8 representing one or more device(s) 11 has the respective intermediary node 4i, 8i as source and the respective node corresponding to the device 11 as target in that sense that the string of pointers 5 start at the root node 3, 7, and lead to the nodes 4, 8.

The tree-type data structure 1 may also be modified to add or remove devices 11 from the structure 1. The removal of a device 11, in this case C, is shown in Fig. 5. The method 100 then comprises the removal of nodes and pointers for devices 11 that are removed from the system 10, when such a removal is indicated in the event message 13.

In Fig. 5 the new branch 2 on the right side shows the new branch, which builds upon the previous branch of modifying device 11 A to A'. This is merely exemplary, the modification, removal, or addition of devices 11 can of course also be effected in any combination.

As can be seen in Fig. 5, the new branch 2 has a new root node 3, which has pointers 5 to all remaining devices 11 A, B, and D. There is no pointer 5 or string of pointers 5 from the new root node 3 to device 11 C anymore. New intermediary nodes 4i, which are optional, are created as necessary.

Fig. 6 shows the addition of device 11 E. Therein, new node 4 for new device 11 E is created and connected via pointers 5 to the new root node 3. Also, all remaining devices 11 are also connected to the new root node 3, as described above. Again, new intermediary nodes 4i, which are optional, are created as necessary.

Method 100 can also be executed in loops. Each loop represents the recording of a system state. Each of the individual loops can be triggered to start. There are a variety of triggers that can be used for starting a loop. Some examples are starting a loop when triggered by receiving one or more of the event messages 13. Alternatively, or in addition, a loop can be triggered to start at fixed times or in fixed time intervals. Also, external triggers, e.g. by a person or in response to a sensor event, may start a loop. These triggers can also be used in and combination, and also other triggers may be used.

One further example for a trigger may be advantageously given in that the generated instruction(s) 18 comprise a time or time interval for a next iteration of the method 100, which would then be used as trigger to start a loop.

As a further improvement, the new branch 2 and/or new nodes 4, 4i created by the method 100 can be stored as read-only data. This can be effected by marking the data as read-only. The marking as read-only can for example be caused by a corresponding indication comprised in the event message 13. In this case, only the data for specific devices 11 may be marked read-only, or the whole state 9.

It should be noted that the marking as read-only can also be reversed. This can be configured to require higher privileges, like admin or supervisor privileges.

Another improvement can be seen in that each node 4, 4i, 8, 8i may comprise a hash value. The hash value may be created from the data values 12 in the respective node 4, 4i, 8, 8i and can be written into the node at the time of its creation or later on.

Such a hash can also be a crypto-graphic hash.

According to an embodiment, the tree-like data structure 1 may be distributed, meaning it is stored in parts, possible on different storing devices, or even different computers on possibly different location. The method 100 can then further comprise a step of combining 115 the parts of the data structure 1 before creating 120 a new branch. In such implementation using hash values, the resulting data is immutable and, in this aspect, read-only.

In the following a method 200 for generating, from a tree-type data structure 1, a time-specified state 9 of a system 10 is described with reference to Figs. 3 to 6.

The system 10 is basically as described above for the recording of the system state 9. The details that are the same are omitted. The generation 200 of the system state is performed on the basis of a specified timestamp 19, which means, that a timestamp 19 is selected from the timestamps 19 where a state 9 was recorded, based on the stored timestamps 19 in the root nodes 7 of the available states 9, or an arbitrary timestamp is picked, and the youngest state 9 which is older than the picked timestamp 19 is used, based on the timestamps 19 stored in the root nodes 7 of the respective states 9. For clarity of the figures, timestamps 19 are not shown in Figs. 3 to 6 but comprised in every root node 3, 7.

The tree-type data structure 1 comprises branches 6, each branch 6 comprises a root node 7 and other nodes 8. Other intermediary nodes 8i can also be present, but they are optional, as discussed above.

Each of the root nodes 7 comprises at least a timestamp 19 and event information 14 and each of the other nodes 8 comprises the data values 12 of a corresponding device 11.

Further, each of the other nodes 8 is connected as a target by a pointer 5 to either one root node 7 of one of the branches 6 or to another node, like an intermediary node 8i of one of the branches 6 with a direct pointer 5 connection (i.e. the intermediary node 8i is directly connected) to one root node 7 as a source.

For each of the devices 11, each two other nodes 8 (in respective different branches identified by different timestamps), which correspond to one particular device 11, are different in at least one data value 12 comprised in the other nodes 8 of the corresponding device 11. As stated above, since in the generation of a branch a new node for an existing device is only added when the data values have changed in comparison to the already existing, most recent node for this device, each two nodes for a device are different, at least in one data value that is comprised in the nodes.

The method 200 for generating the state 9 then comprises a first step 210 of identifying a first root node (7) as a starting point according to the specified timestamp (19).

Then, in step 220 the respective next level of nodes 8, 8i of the identified first root node's 7 branch 6 is repeatedly identified by following all pointers of the previously identified nodes to target nodes 8, 8i.

In accordance with figures 3-6 this would mean that in the first repetition (run), the pointers 5 from the root node 7 to the first level of intermediary nodes 8i are followed. In the second repetition (second run), all pointers 5 to the second level of intermediary nodes 8i are followed. Finally, in the third and last repetition, the pointers 5 to the corresponding nodes 8 (that are representative of the devices' 11 state at the time indicated by the timestamp 19) are followed.

Finally in step 230, the information stored in all identified nodes 8, 8i is added or compiled together to generate the time-specified system state 9. This refers in particular to all data values 12 stored in the nodes 8.

Alternatively, a time-specified system state can also be generated based on an event information 14. Such a desired (searched for or looking for) event information 14 can be searched within the plurality of stored root nodes 7, which would then have (reveal) the corresponding timestamp 19. It may therefore be possible to re-execute the WCS or WMS code, e.g. in a replay-tool, in that the state before the (desired or looking at) event 14 was executed is loaded from the state storage and the WCS or WMS code is checked out from the code storage to the version (commit) that is defined in the (according to the timestamp 19 time-specified) state and is built (i.e. built code is generated); the so executable program is started with parameters indicating the respective (desired) state (commit) to start from and the program then starts and loads the in memory state to (with) the version of the provided commit and calls the deterministic wcs execution function.

The resulting side effects can then be observed but will not be re-executed as the environment (in particular devices of the system) cannot be setup to deal with the execution of those side-effects (since devices may be in another state, or not available at all).

In a further improvement, a second (time-specified) system state 9 may be generated in the same fashion, for a different timestamp 19 or the event information 14. The method 200 can then further comprise comparing 240 the first and second states 9, whereby changes in the data values 12 of the devices 11 can be identified, which facilitates e.g. debugging.

As laid out above for the method 100 of recording a state 9, the devices 11 of the system 10 may be grouped together in groups and/or levels. The data structure 1 then has corresponding intermediary nodes 8i.

The method 200 for generating a state 9 can further comprise a step 250 of verifying the hash value of the data values 12 of a node 4, 4i, 8, 8i.

And finally, if the tree-like data structure 1 is distributed, the method 200 may further comprise a step 215 of combining the parts of the data structure 1 before generating a system state 9.

Another aspect of the present invention is a data processing apparatus 300 which comprises means and is configured to carry out any of the methods 100, 200 described herein. Such a data processing apparatus 300 could then be used as a WCS system according to the invention.

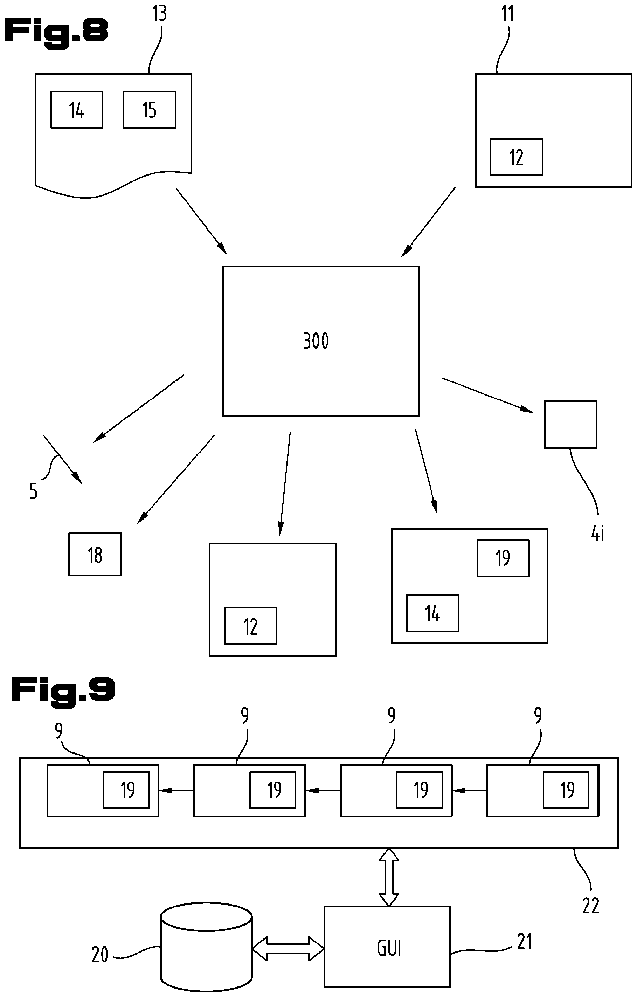

Fig. 8 shows very schematically that event messages 13 comprising event information 14 and/or data value changes 15 are handled by the data processing apparatus 300. Apparatus 300 can also be provided with the current data values 12 of devices 11 (A, B, C, D, A', E). Apparatus 300 then creates nodes 8 respectively (new) nodes 4 and 4i (if applicable), wherein nodes 8, 4 comprise the data values 12 of the respective devices 11 (A, B, C, D, A', E). Apparatus 300 also creates root nodes 3, each comprising a timestamp 19 and event information 14. Apparatus 300 also creates pointers 5.

As a further enhancement, it is also possible to find all branches 6, where the data values of a device 11 have changed. In order to find all branches 6 in which a specific object, i.e. the node 4, 8 of a device 11, and more precisely the data values 12 of that device 11, has been changed, it is necessary to check for each branch 6 whether a pointer to a node 4, 8 has changed. If the node comprises a hash value of the data values 12, the hash value can be checked, too. However, since the hash value of the data values 12 can be identical, for example, if the data values 12 are very simple, i.e. binary values, or if the data values 12 are made of predetermined values like "idle", "pending" and "ready", the hash values of two different nodes 4, 8 could be the same, in particular if a device 11 reverted to a previous state. To find the branches 6 with a change, a divide-and-conquer approach could be used, in which the time range in which the search is performed is divided. To prevent nodes 4, 8 from resetting to their old hash value, generation numbers can be comprised in the nodes 4, 8. This means that every time a data value 12 is changed, a version (data) field may be incremented by a dedicated value, preferably the value one. This particularly ensures that the hash of the node 4, 8 is always different.

The presented techniques can also be used to facilitate simulations and so-called post-mortem analysis. A new branch 2 can be created at any time by extracting a state 9 of a system 10 to a simulation system and then feed event messages 12, particularly artificial event messages 12, which are prepared or entered manually, to a simulation system. Thereby, different scenarios can be simulated, for example new devices 11 can be introduced and, for instance, a resulting load distribution can be determined. A post-mortem analysis can be achieved thereby, e.g.: What would have happened if additional (picking) work centres (i.e. new devices 11) had been activated or added in this situation? For such simulations, it would be technically possible to "branch" the status at a certain point in time, i.e. to use a branch as the basis for branching in a new direction, in particular constituting a new setup of devices or setup of new devices.

Also, from a performance perspective, the storage abstraction of a key-value memory, in which key and value are clearly related to each other, can be used as a significant advantage. Since only new data is ever written and nothing is overwritten (append-only), there is no need to wait for a "commit" when writing, i.e. until a branch is successfully stored - and possibly a confirmation is returned. In case (event of) a write operation fails, the last completely recoverable state can be used. Also, this does not indicate that future writes will also fail. In combination with the deterministic code, the "lost" subsequent states can be recalculated.

Fig. 9 shows a replay tool. Therein, a data storage 22 is shown, where a plurality of system states 9 are stored. Each state 9 comprises a timestamp 19, which allows accessing an individual state 9 identified by its timestamp 19. A replay tool is executed on a computer 21, which can have a graphical user interface, GUI. The computer is connected with a code database, or code DB, 20. After accessing a state 9 in the data storage 22 based on the timestamp 19 for a specified time, the replay tool can generate a virtual copy of a system 10 by retrieving the necessary code elements according to the accessed state 9 from the code data base 20.

The replay tool can generate an executable virtual copy of the system 10 and initialize or instantiate the system based on the state 9. After a virtual system is set up, by initialisation or instantiation, the virtual system can be fed event messages 13. These event messages can be taken from a log of a system 10. Thereby, the virtual system can be monitored step by step, and possible failures can be observed. Alternatively, the event messages can be generated and fed to the virtual system, allowing for what-if scenarios.

Another aspect is a computer program product comprising instructions which, when the program is executed by a computer, cause the computer to carry out any of the methods 100, 200 described herein. An embodiment thereof is a computer-readable medium having stored thereon the computer program product.

The embodiments show possible embodiment variants, however, it should be noted that the subject-matter is not limited to the embodiment variants specifically shown, but rather various combinations of the individual embodiment variants with one another are also possible.

The scope of protection is defined by the claims. However, the description and the drawings are to be used to interpret the claims. Individual features or combinations of features from the various embodiments shown and described may constitute independent inventive solutions. The problem underlying the independent inventive solutions can be taken from the description.

All indications of value ranges in the present description are to be understood as including any and all subranges thereof, e.g. the indication 1 to 10 is to be understood as including all subranges starting from the lower limit 1 and the upper limit 10, i.e. all subranges start with a lower limit of 1 or greater and end at an upper limit of 10 or less, e.g. 1 to 1.7, or 3.2 to 8.1, or 5.5 to 10.

Finally, for the sake of order, it should be noted that some elements have been shown out of scale and/or enlarged and/or reduced in size for a better understanding of the structure.

### List of reference signs

| | | | |
|---|---|---|---|
| 1 | Tree-Type data structure | 12 | Data values |
| 2 | New Branch | 13 | Event messages |
| 3 | New Root Node | 14 | Event information |
| 4, 4i | New (intermediary) Node/s | 15 | Data value changes |
| 5 | Pointers | 16 | Controller |
| 6 | Existing Branch/s | 18 | Instructions |
| 7 | Existing Root Node/s | 19 | Timestamp |
| 8, 8i | Existing (intermediary) Node/s | 20 | Code data base |
| 9 | State(s) of the system | 21 | Computer |
| 10 | System | 22 | Data storage |
| 11 | Devices | | |
| 100 | Method of recording a state of a system | | |
| 110 | Handling of event messages | | |
| 111 | Receiving event messages | | |
| 112 | Determining a previous state of the system | | |
| 113 | Generating Instructions | | |
| 114 | Transmitting Instructions | | |
| 115 | Combining data structure parts | | |
| 120 | Creating a new branch | | |
| 130 | Creating a new node | | |
| 140 | Creating pointers | | |
| 200 | Method of generating a state of a system | | |
| 210 | Identifying first root node | | |
| 215 | Combining data structure parts | | |
| 220 | Repeatedly identifying next levels | | |
| 230 | Adding the information | | |
| 240 | Comparing two states | | |
| 250 | Verify hash value | | |
| 300 | Data processing apparatus | | |

## Claims

1. Computer-implemented method (100) of recording, in a tree-type data structure (1), a state (9) of a system (10) that comprises one or more devices (11);
wherein each device (11) has assigned thereto a plurality of data values (12) comprising variable operational parameters and measured values;
wherein the method comprises:
handling (110) of event messages (13), wherein each of the event messages (13) comprises event information (14) and data value changes (15);
creating (120) a new branch (2) of the data structure (1) comprising a new root node (3) comprising at least a timestamp (19) and event information (14) of one or more event messages (13);
creating (130), for each of the devices (11), for which data value changes (15) are comprised in the event messages (13), one new node (4) in the new branch (2), wherein each new node (4) comprises one or more data values (12) of the respective device (11);
creating (140) pointers (5) for each of the devices (11) of the system (10) at the time indicated by the timestamp (19) from the new root node (3) or from one of the new nodes (4),
wherein, for devices (11) for which data value changes (15) are comprised in the event messages (13), one new pointer (5) is targeted to the new node (4) in the new branch (2), wherein the new node (4) corresponds to the respective device (11); and
wherein, for devices (11) for which there were no data value changes (15) in the event messages (13), one new pointer (5) is targeted to an existing node (8) in an existing branch (6), wherein the existing node (8) corresponds to the respective device (11), and wherein the targeted existing node (8) is the same node (8) that is targeted from the root node (7) of the most recent existing branch (6) for the respective device (11).

2. Computer-implemented method (100) according to claim 1, wherein the system (10) further comprises a controller (16) and the one or more devices (11) are controlled by the controller (16), wherein the controller (16) is connected to the one or more devices (11) via a data transmission connection, the handling (110) of event messages (13) comprises:
receiving (111), from one of the devices (11) or from the controller (16), one or more event messages (13);
determining (112) a previous state (9) of the system (10), wherein a state (9) of the system (10) comprises states of the controller (16) and the one or more devices (11); and
generating (113) instructions (18) based on the previous state (9) and the event message (13); and
transmitting (114) the instructions (18) to a target or targets, wherein the targets of the instructions (18) are the one or more devices (11) if the event message (13) was received from the controller (16), and the target of the instructions (18) is the controller (16) if the event message was received from one of the devices (11), and wherein the instructions (18) are deterministic and suitable to modify the target or targets into a new state (9).

3. Computer-implemented (100) method according to claim 1 or 2, wherein the devices (11) of the system (10) are grouped together in two or more groups and/or two or more levels, and the data structure (1) has several levels of intermediary nodes (4i, 8i), where each intermediary node (4i, 8i) represents each device (11), group or level, wherein the pointer (5) of a node representing one or more devices (11) has the respective intermediary node (4i, 8i) as source and the respective node corresponding to the device (11) as target.

4. Computer-implemented method (100) according to any one of claims 1 to 3, wherein the method (100) comprises adding and/or deleting of nodes and pointers for devices (11) that are introduced to the system (10) or removed therefrom, wherein the introduction or removal is indicated in the event message (13).

5. Computer-implemented method (100) according to any one of claims 1 to 4, wherein the method loops, and each loop is triggered
by receiving one or more of the event messages (13),
at fixed times or in fixed time intervals, and/or
by an external trigger.

6. Computer-implemented method (100) according to any one of claims 2 to 5, wherein the generated instructions (18) comprise a time or time interval for a next iteration of the method (100).

7. Computer-implemented method (100) according to any one of claims 1 to 6, wherein the method (100) further comprises marking the new branch (2) and/or new nodes (4, 4i) as read-only, based on a corresponding indication comprised in the event message (13).

8. Computer-implemented method (100) according to any one of claims 1 to 7, wherein each node (4, 4i, 8, 8i) comprises a hash value of the data values (12) in the node (4, 4i, 8, 8i).

9. Computer-implemented method (100) according to any one of claims 1 to 8, wherein the tree-like data structure (1) is distributed, and the method (100) further comprises combining (115) the parts of the data structure (1) before creating (120) a new branch.

10. Computer-implemented method (200) of generating, from a tree-type data structure (1), a time-specified state (9) of a system (10) that comprises one or more devices (11),
wherein generating (200) of the time-specified state (9) is performed based on a specified timestamp (19);
wherein each device (11) has assigned thereto a plurality of data values (12) comprising variable operational parameters and measured values;
wherein the tree-type data structure (1) comprises branches (6), each branch (6) having a root node (7) and other nodes (8);
wherein each of the root nodes (7) comprises at least a timestamp (19) and event information (14);
wherein each of the other nodes (8) comprises one or more data values (12) of a corresponding device (11);
wherein each of the other nodes (8) is connected as a target by a pointer (5) to either one root node (7) of one of the branches (6) or to another node (8) of one of the branches (6);
wherein for each of the devices (11), each two other nodes (8), which correspond to one particular device (11), are different in at least one data value (12) comprised in the other nodes (8) of the corresponding device (11); and
wherein the method (200) comprises:
identifying (210) a first root node (7) as a starting point according to the specified timestamp (19);
repeatedly (220) identifying a next level of nodes (8) of the identified first root node's (7) branch by following all pointers of the previously identified nodes (8) to target nodes (8) of devices (11); and
adding (230) the information stored in all identified nodes (8) to generate the time-specified system state (9).

11. Computer-implemented method (200) according to claim 10, wherein a second system state (9) is generated based on a second specified timestamp (19) or
the event information; and
wherein the method (200) further comprises:
comparing (240) the time-specified system state (9) and the second system state (9), thereby identifying changes in the data values (12) of the devices (11).

12. Computer-implemented method (200) according to claim 10 or 11, wherein the devices (11) of the system (10) are grouped together in two or more groups and/or two or more levels, and the data structure (1) has several levels of intermediary nodes (8i), wherein each intermediary node (8i) represents one of device (11), group, or level, and wherein the pointers (5) to a node (8) have the respective intermediary node (8i) as source and the respective node as target.

13. Computer-implemented method (200) according to any one of claims 10 to 12, wherein the method (200) further comprises verifying (250), for one or more nodes (8, 4), a hash value of the data values (12).

14. Computer-implemented method (200) according to any one of claims 10 to 13,
wherein the tree-like data structure (1) is distributed, and the method further comprises combining (215) the parts of the data structure (1) before generating the time-specified system state (9) and/or the second system state (9).

15. Computer-implemented method (200) according to any one of claims 10 to 14
wherein the time-specified state (9) of the system (10) is accessed from a plurality of states (9) on a data storage (22), and
wherein a virtual system is generated on a computer (20) by
retrieving, from a code database (20), executable code for all devices (11) that are comprised in the generated time-specified state (9) of the system (10);
building the virtual system on the computer (20) on the basis of the retrieved executable codes; and
initializing or instantiating the virtual system with the time-specified state (9) of the system (10).

16. A data processing apparatus (300) comprising means for carrying out the method (100, 200) of any one of claims 1 to 15.

17. A computer program product comprising instructions which, when the program is executed by a computer, cause the computer to carry out the method (100, 200) of any one of claims 1 to 15.

18. A computer-readable medium having stored thereon the computer program product of claim 17.
